# EUROPÄISCHE PATENTANMELDUNG

(11) **EP 0 575 876 A1**
(43) Veröffentlichungstag der Anmeldung: **29.12.1993**
(21) Anmeldenummer: 93109598.8
(22) Anmeldetag: 16.06.1993
(51) Int. Cl.: B23K 37/04, F04F 5/54

(54) **Verfahren zum Heben des Flüssigkeitsspiegels eines Bearbeitungstisches**

(30) Priorität: 24.06.1992 DE 4220549
(71) Anmelder: MESSER GRIESHEIM GMBH, D-60547 Frankfurt (DE)
(72) Erfinder: Ebeling, Helge, D-6521 Bechtheim (DE)

(57) **Zusammenfassung**

Die Erfindung betrifft ein Verfahren zum Heben des Flüssigkeitsspiegels eines Bearbeitungstisches für die thermische Bearbeitung von Werkstücken, mit einem Behälter, in den ein Verdrängungsgas geleitet wird und/oder zum Erzeugen eines dem Bearbeitungstisch kontinuierlich zugeführten Gasstromes. Um den Druckgasverbrauch zu reduzieren wird das Verdrängungsgas bzw. der Gasstrom aus einem Treibgas und einem angesaugten Umgebungsgas gebildet.

## Beschreibung

Die Erfindung betrifft ein Verfahren zum Heben des Flüssigkeitsspiegels eines Bearbeitungstisches für die thermische Bearbeitung von Werkstücken, mit einem Behälter, in den ein Verdrängungsgas geleitet wird und/oder zum Erzeugen eines dem Bearbeitungstisch zugeführten Gasstromes.

Beim thermischen Bearbeiten von Werkstücken, beispielsweise Blechen, war eine erhebliche Verunreinigung der Arbeitsplatzumgebung bzw. der Umgebung der automatischen Bearbeitungsstation, unvermeidbar. Zur Unterdrückung dieser Umgebungsbelastung sind sogenannte Wassertische entwickelt worden, die unter den Schneidbrennern angeordnet sind und das Werkstück beim Schneiden tragen. Beim Schneiden fallen die Schneidabfälle in das unmittelbar unter dem Werkstück geführte Wasser oder die Werkstücke befinden sich während des Schneidens bereits vollständig unter Wasser, z.B. beim Wasserplasmaschneiden. Durch diese Maßnahme wird die Umweltbelastung an der Schneidstation spürbar verringert. Das mit dem Schneidabfall belastete Wasser wird dann entweder kontinuierlich oder diskontinuierlich aus dem Wassertisch abgezogen. Zum Anheben und Absenken des Wasserspiegels wird bei diesen Wassertischen ein Mechanismus verwendet, der nach dem Prinzip der Luftglocke arbeitet. Durch Einpressen von Luft in einen unter dem Wasserspiegel angeordneten Verdrängungsbehälter wird Wasser aus diesem Behälter herausgedrückt und der Wasserspiegel im Wassertisch dadurch bis unmittelbar an oder über das Werkstück angehoben. Nach Abschluß der Bearbeitung des Werkstücks wird der Verdrängungsbehälter geöffnet, so daß das Wasser in den Behälter zurückströmen kann und der Wasserspiegel im Tisch dadurch soweit abgesenkt wird, daß das Werkstück an der Bearbeitungsstelle zugänglich ist. Mit zunehmenden Anforderungen an den Umweltschutz haben sich die Wassertische als Schneidtische beim Brennschneiden in der Praxis durchgesetzt.

Üblicherweise ist der Behälter des Wassertisches an eine Druckluftversorgung angeschlossen. Durch Öffnen von Absperrventilen wird das Druckgas in den Behälter eingedrückt und der Wasserspiegel angehoben.

Nachteilig bei diesen Ausführungen ist der hohe Druckluftverbrauch, der in Normkubikmetern gerechnet etwa dem verdrängten Wasservolumen entspricht und die bei "schneller" Füllzeit hohe Druckbelastung (Druckstoß) des Behälters.

Der Erfindung liegt daher die Aufgabe zugrunde, den Druckgasverbrauch bei Wassertischen zu reduzieren.

Ausgehend von dem im Oberbegriff des Anspruches 1 berücksichtigten Stand der Technik ist diese Aufgabe erfindungsgemäß gelöst mit den im kennzeichnenden Teil des Anspruches 1 angegebenen Merkmalen.

Durch das erfindungsgemäße Formen eines Treibgasstrahles, dessen Bewegungsenergie auf ein Umgebungsgas übertragen wird, das vorzugsweise aus der der Atmosphäre entnommenen Luft besteht, wird der Druckgasverbrauch erheblich gesenkt, da sich Treibgasstrahl und Umgebungsgas mischen und gemeinsam miteinander in den Behälter strömen. Durch die Erfindung wird der Druckgasverbrauch auf bis zu 30 % des ursprünglichen Wertes reduziert.

Ein weiterer Vorteil des erfindungsgemäßen Verfahrens besteht in der Vermeidung der hohen Druckbelastung des Behälters durch den Druckstoß, weil die Druckenergie aus dem Druckgas in Bewegungsenergie des Treibgasstrahls und des Umgebungsgases umgewandelt wird.

Nach einer vorteilhaften Ausgestaltung des Verfahrens kann ein aus Treibgas und Umgebungsgas gebildeter Gasstrom zu der Werkstückunterseite oder zu der Deckelunterseite des Behälters geleitet werden. Durch diese Maßnahmen wird es bei geringem Druckgasverbrauch vorteilhaft möglich, brenn- bzw. explodierbare Gase zu entfernen.

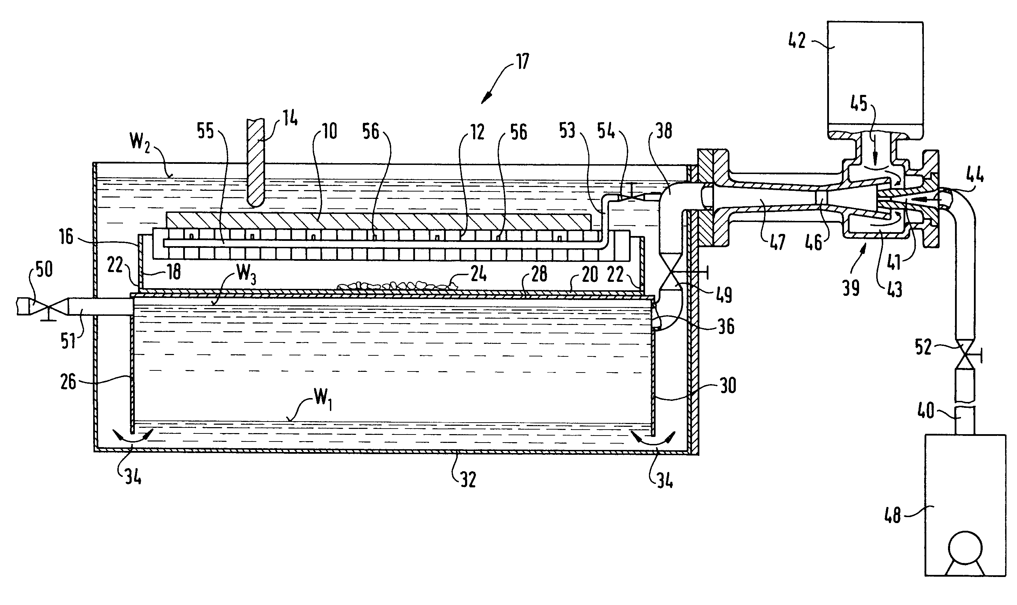

Ein Ausführungsbeispiel der Erfindung ist in der Zeichnung dargestellt und wird im folgenden näher beschrieben.

Die einzige Figur zeigt im Querschnitt ein Werkstück 10, das auf einem Schneidrost 12 liegt, um von einem Plasma-Brenner 14 zerschnitten zu werden. Der Plasma-Brenner 14 ist Bestandteil einer nicht dargestellten Brennschneidmaschine, an der er in der parallel zur Oberfläche des Werkstückes 12 verlaufenden Ebene beliebig verfahrbar angeordnet ist.

Der Schneidrost 12 ist lösbar auf einer Schlackewanne 16 befestigt, die innerhalb einer mit Wasser gefüllten Wanne, eines sogenannten Wassertisches 17 angeordnet ist. Der Schneidrost 12 kann allerdings mit der an ihm befestigten Schlackenwanne 16 zusammen aus dem Tisch 17 herausgehoben werden. Die fast bis an die Oberseite des Schneidrostes 12 hochgezogenen Seitenwände 18 der Schlackenwanne 16 sind an ihrem dem Boden 20 der Schlackenwanne 16 zugekehrten Ende mit kleinen Aussparungen 22 versehen. Diese Aussparungen bilden derart kleine Öffnungen, daß sie den Zu- bzw. Ausfluß von Wasser in- bzw. aus der Schlackenwanne 16 zwar erlauben, die auf dem Boden 20 beim Schneiden des Werkstückes 10 anfallende Schlacke 24 aber wirksam in der Wanne 16 zurückhalten. Die Schlackenwanne 16 ist mit ihren Breiten- und Längenabmessungen größer als das größte zu schneidende Werkstück 10, so daß sichergestellt ist, daß alle beim Schneiden anfalllenden Werkstoffteilchen in die Schlackenwanne 16 fallen.

Unterhalb der Schlackenwanne 16 ist ein nach unten offener Behälter 26 (Verdrängungsbehälter) raumfest in dem Wassertisch 17 angeordnet. Der Behälter 26 besteht somit aus einem Deckel 28 und ihn seitlich begrenzenden Seitenwände 30, wobei letztere mit der Bodenplatte 32 des Wassertisches 17 Öffnungen 34 freilassen.

Am Behälter 26 befindet sich mindestens eine Anschlußöffnung 36, durch die über Leitung 38 in das Innere des Behälters 26 ein Gas eingeblasen wird. Mit der Leitung 38 ist eine Strahlpumpe 39 verbunden, in die über die Gaszuführungsleitung 40 ein Druckgas aus einer Gasversorgung 48 geleitet wird. Das Druckgas 44, vorzugsweise Druckluft, strömt mit einem Überdruck in eine Treibdüse 41, aus der es als Treibgasstrahl mit hoher Geschwindigkeit austritt. Das zum Treibgasstrahl geformte Druckgas 44 saugt über die Kammer 43 vorzugsweise aus der Atmosphäre ein vorzugsweise druckloses Umgebungsgas 45, vorzugsweise Luft, an, mischt sich mit ihm in einer nachgeschalteten Mischdüse 46 und überträgt dabei soviel von seiner Geschwindigkeitsenergie auf das Umgebungsgas, daß beide miteinander über einen Diffusor 47 zu dem Behälter 26 strömen. In dem Diffusor wird die hohe Geschwindigkeit und der geringe Druck des Treibgas/Umgebungsgas-Gemisches in eine Strömung mit kleinerer Geschwindigkeit und größerem Druck umgesetzt. Sobald der gewünschte Wasserstand erreicht ist, werden die Ventile 49 und 52 geschlossen. Ventil 50 ist beim Hebevorgang geschlossen. Mit der gleichen Einrichtung kann auch der Behälter 26 in dem Raum oberhalb des Wasserspiegels W₃ (also bei abgelassenem Wasserstand) kontinuierlich von einem Gasstrom durchspült werden. Hierbei sind selbstverständlich die Ventile 49, 50, 52 geöffnet. Dadurch wird z.B. beim Schneiden von Leichtmetallen erreicht, daß sich in diesem Raum keine brenn- bzw. explodierbaren Gase/Gasegemische bilden können.

Es ist selbstverständlich, daß die Kammer 43 auch mit einer Umgebungsgas enthaltenden Versorgung, beispielsweise mit einer Gasflasche, verbunden werden kann, die ein beliebiges vorzugsweise inertes Gas enthält.

Das in den Behälter 26 eingeblasene Gas wird über die Leitung 38 oder eine separate Abblaseleitung 51 aus dem Behälter abgelassen. Zu diesem Zweck sind geeignete Absperrventile 49, 50 vorgesehen.

Der Behälter 26 und der Wassertisch 17 sind in ihren Abmessungen so ausgelegt, daß sich durch das oben beschriebene Einblasen von dem Gas in den Behälter 26 der Wasserstand in diesem wie in der Zeichnung durch W₁ kenntlich gemacht einstellt. Der durch W₂ kenntlich gemachte Wasserstand entspricht dabei dem zu W₁ resultierenden Wasserstand außerhalb des Behälters 26 in dem übrigen Wassertischbereich. Nach Ablassen des sich zwischen dem Wasserspiegel W₁ und dem Deckel 28 innerhalb des Behälters 26 durch das Einblasen von Gas entstandenen Überdruckes in die Außenluft, stellt sich der Wasserspiegel innerhalb und außerhalb des Behälters 26 wie in der Zeichnung mit W₃ dargestellt ein.

Der eigentliche Schneidvorgang findet beim Wasserspiegelstand W₂ statt. Beim Wasserspiegelstand W₃ liegt die Schlackenwanne 16 frei. Das sich im Inneren der Schlakkenwanne befindende Wasser läuft beim Absenken des Wasserstandes von W₂ nach W₃ dabei durch die Aussparungen 22 in den Seitenwänden 18 der Schlackenwanne 16 nach außen in den Wassertisch 17 ab. Infolge der geringen Größe der Öffnungen 22 in Bezug auf die beim Schneiden entstehende Schlacke 24, kann diese nicht in den Wassertischbereich außerhalb der Schlackenwanne 26 hineingeschwemmt werden.

Darüber hinaus ist die Strahlpumpe 39 über eine Leitung 53 und Ventil 54 mit einer Sprudeleinrichtung 55 verbunden. Bei geöffnetem Ventil 54 sprudelt Gas kontinuierlich aus Düsen 56 und verhindert eine Bildung von brennbaren/entzündbaren Gasgemischen unterhalb der Werkstückplatte 10.

## Patentansprüche

1. Verfahren zum Heben des Flüssigkeitsspiegels eines Bearbeitungstisches für die thermische Bearbeitung von Werkstücken, mit einem Behälter, in den ein Verdrängungsgas geleitet wird und/oder zum Erzeugen eines dem Bearbeitungstisch kontinuierlich zugeführten Gasstromes,
dadurch gekennzeichnet,
daß das Verdrängungsgas bzw. der Gasstrom aus einem Treibgas und einem angesaugten Umgebungsgas (45) gebildet wird.

2. Verfahren nach Anspruch 1,
dadurch gekennzeichnet,
daß das Verdrängungsgas in den Behälter (26) gefördert wird.

3. Verfahren nach Anspruch 1 oder 2,
dadurch gekennzeichnet,
daß der Gasstrom kontinuierlich in den Behälter (26) vorzugsweise als Spülgas gefördert wird.

4. Verfahren nach einem der Ansprüche 1 bis 3,
dadurch gekennzeichnet,
daß der Gasstrom kontinuierlich unterhalb des Werkstückes (10) vorzugsweise als Sprudelgas zugeführt wird.

5. Verfahren nach einem der Ansprüche 1 bis 4,
dadurch gekennzeichnet,
daß das Verdrängungsgas bzw. der Gasstrom aus Druckluft (44) und dem Umgebungsgas (45) Luft gebildet wird.

6. Einrichtung zur Durchführung des Verfahrens nach Anspruch 1 oder 2 mit einem Wasserbecken und einem Behälter,
dadurch gekennzeichnet,
daß der Behälter (26) und/oder eine Sprudeleinrichtung über eine Strahlpumpe (39) mit einer Druckgas-Versorgung (48) verbunden ist.

7. Einrichtung nach Anspruch 6,
dadurch gekennzeichnet,
daß die Strahlpumpe (39) eine Treibdüse (41) aufweist, die in einer Saugkammer (43) angeordnet ist, welche vorzugsweise über einen Schalldämpfer (42) mit der Atmosphäre verbunden ist.

8. Einrichtung nach Anspruch 6 oder 7,
dadurch gekennzeichnet,
daß der Treibdüse (41) eine Mischdüse (46) nachgeschaltet ist, die über einen Diffusor (42) mit dem Behälter (26) bzw. der Sprudeleinrichtung verbunden ist.
